# EUROPEAN PATENT APPLICATION

(11) **EP 1 333 390 A1**
(43) Date of publication of application: **06.08.2003**
(21) Application number: 02250701.6
(22) Date of filing: 01.02.2002
(51) Int. Cl.: G06F 17/30

(54) **Method of generating a summary module and apparatus therefor**

(71) Applicant: Agilent Technologies, Inc. (a Delaware corporation), Palo Alto, CA 94303 (US)
(72) Inventor: Beattie, Richard, Edinburgh EH11 1BN (GB)
(74) Representative: Coker, David Graeme

(57) **Abstract**

In a signalling network for a communications system, an extremely large number of Call Detail Records (CDRs) are generated and stored. In order to discern meaningful information from the CDRs, it is known to summarise stored CDRs. However, one known method to summarise the CDRs is limited in that only certain fields of an object in which the CDRs are stored can be summarised. It is also known to custom build queries, but this is time consuming and requires technical effort to build the queries. Also, such custom built queries can not be repeatedly executed, for example daily. The present invention therefore provides a method and apparatus that enables selection of a template table . Fields are also selectable along with functions corresponding to the selected fields so as to define a summary. Once selection of fields and functions has been completed, a summary module generator generates a set of repeatably executable instructions that can generate the summary (216) based upon a table of CDRs (210) stored daily.

## Description

The present invention relates to a method of generating a summary module of the type, for example, that summarises data records contained in a database. The invention also relates to an apparatus for generating the summary module, and a communications system comprising the apparatus for generating the summary module. The present invention is of particular use in, but not exclusively, a communications system, for example, of the type having a signalling network operating substantially in accordance with Signalling System No. 7, whether as specified by the CCITT, ANSI, ETSI (for GSM), Bellcore or similar body, such as a network being herein referred to as an SS7 network. The CCITT Signalling System Number 7 is specified in Recommendations Q.700 - Q.716 CCITT Volume VI-Fascicle VI.7, Geneva 1989, ISBN 92-61-03511-6.

In modern switched telecommunications systems (in particular, modern PSTNs) it has become common practice to provide two related but separate network infrastructures: a bearer or transmission network for carrying end-user voice and data traffic, and a signalling network for controlling the setup and release of bearer channels through the bearer network in accordance with control signals transferred through the signalling network. In practice, such signalling networks comprise high-speed computers interconnected by signalling links; computer programs control the computers to provide a set of operational and signalling functions in accordance with a standardised protocol. One example of such a signalling protocol is the afore-mentioned Signalling System No. 7 (SS7) which is being extensively deployed for control of telephone and other data transmission networks. An SS7 network basically comprises various types of signalling points, namely, Signalling End Points (SEPs), for example an end office or local exchange, and Signalling Transfer Points (STPs) interconnected by signalling links, the SEPs being associated for example with respective Signalling Switching Points (SSPs) of the transmission network, and with Service Control Points (SCPs).

As is known in connection with SS7, signalling information is passed over the signalling links. In particular, the signalling information is carried by Message Signal Units (MSUs) in fields. Some of the fields are extracted from the MSUs to generate a Call Data Record (CDR) for storage in a CDR store. In addition to, or as an alternative to, generation of CDRs from the MSUs, other types of detail record can be generated, for example, a Transaction Detail Record (TDR) or a Service Detail Record (SDR). CDRs, TDRs and SDRs are examples of data records, more precisely, Detail Records (DRs). There are also different variants of CDRs, TDRs and SDRs (DRs), a variant being defined by a particular combination of fields.

When monitoring a telecommunications network, a large number of data records can be generated; potentially, millions of data records can be generated on a daily basis. Furthermore, as already exemplified above, a number of different data record formats exist. Analysis of the data records generated provides useful information for network owners, the type of information that can be obtained depending upon the nature of the data records being analysed. However, analysis of the data records is slow when the data records are large in number; analysis of data collected during one day can take longer than 24 hours, therefore making analysis of the data unworkable.

In relation to CDRs, it is known to speed analysis by summarising stored CDRs. In particular, the acceSS7 Business Intelligence Solution available from Agilent Technologies UK Limited has a summarisation capability. CDRs are collected and passed to a Data Management component (DMC). The DMC manages the collection and storage of the CDRs and also allows user applications, for example an Interconnect Analysis application, to perform operations on the CDRs prior to being loaded into a relational database, such as an Oracle ® relational database. For each day the communications network is monitored, the DMC is scheduled to run at least once, respectively generating at least one object comprising CDRs; the at least one object is added to the Oracle relational database.

As the CDRs filling the at least one object are loaded into the database, the Interconnect Analysis application (also available from Agilent Technologies UK Limited) adds information to the CDRs and runs a summarisation component once loading of the at least one object has been completed. The summarisation component provides summary data that is based upon a number of fields specific to one type/variant of CDR, thereby providing statistics relating to, for example, minutes of use of the communications network for traffic originating from and terminating to other carriers. However, the above summarisation component is only designed to summarise one type/variant of CDR for analysis of traffic to interconnected carriers, i.e. fields used by the summarisation module can not be varied.

In order to summarise data records other than for interconnect analysis, the summarisation component would need to be rewritten; this is an unfeasibly expensive and time consuming option, requiring development, testing and associated project management. An alternative is to custom design individual summaries using manual SQL queries. However, since such custom designed summaries are manually generated, they do not comprise functionality necessary to generate regularly summaries using a same query. In addition, known techniques do not manage storage capacity associated with the generation of summaries.

According to a first aspect of the present invention, there is provided a method of generating a summary module for a communications system, the method comprising the steps of: identifying a desired object template to be summarised; defining the summary by selection of at least one field from the desired object template and at least one function associated with the at least one field; generating a plurality of instructions for summarising at least one object compatible with the desired object template according to the selected at least one field and the at least one function; characterised in that: generation of the plurality of instructions is automated.

Preferably, the plurality of instructions is arranged to be executable more than once, execution including accessing more than one object over a period of time, the more than one object having the selected at least one field.

Preferably, procedures from the summary module may be called along with procedures from a standard (or core) summary module by a set of executable instructions.

Preferably, the desired object and the more than one object are tables and/or partition tables and/or views.

Preferably, the plurality of instructions is arranged to be executable periodically.

Preferably, the summary is further defined by identifying a grouping of fields.

Preferably, the summary is further defined by identifying at least one field, the content of which is to be summed, counted or averaged.

Preferably, the plurality of instructions (more preferably, statements) is executable by a set of instructions via a computer program with either a graphical user interface or a command line user interface.

Preferably, the method further comprises the step of managing space within a database comprising one or more summary generated by the plurality of instructions.

Preferably, the method further comprises providing a mask to identify the more than one object over the period of time.

According to a second aspect of the present invention, there is provided a method of summarising data characterised by the steps of: generating a summary module as set forth in accordance with the first aspect of the present invention; executing the summary module more than once.

According to a third aspect of the present invention, there is provided a summary module generator for a communications system, comprising: an interface to permit identification of a desired object template to be summarised and selection of fields from the desired object template and at least one function associated with the at least one field; characterised by means for automated generation of a plurality of instructions for summarising at least one object compatible with the desired object template according to the selected at least one field and the at least one function.

Preferably, the plurality of instructions is arranged to be executed more than once, execution including accessing more than one object over a period of time, the more than one object having the selected at least one field.

Preferably, the plurality of instructions (more preferably, statements) is executable from a set of instructions either via a graphical user interface or a command line user interface.

Preferably, the plurality of instructions is arranged to be executable periodically.

Preferably, the interface permits identification of a grouping of fields.

Preferably, the interface permits identification of at least one field, the content of which is to be summed, counted or averaged.

Preferably, the generator further comprising means for managing space within a database comprising one or more summary generated by the plurality of instructions.

Preferably, a mask is provided to identify the more than one object.

According to a fourth aspect of the present invention, there is provided a summarisation management unit comprising: means for storing a list of summary modules; and means for executing at least one summary module from the list of summary modules.

The summary module may be executable by a computer program. The summary module typically includes a plurality of instructions which may be statements and/or commands. The statements may be SQL statements.

It is thus possible to provide a method of generating a summary module and a summary module generator that obviates manual design of summary modules, the summary modules being executable on a regular basis, for example daily, or more or less frequently. Additionally, tables of different formats can be summarised and more than one summary can now be created from a same object. Due to the flexibility, simplicity and ease with which summaries can be generated, a field engineer is empowered to custom summarise objects that can assist diagnostic investigations into a communications network. In fact, the regular production of statistics enables the identification of trends in data over periods of time, for example several days or weeks. The provision of the present invention shifts the emphasis of technical effort from design of summaries onto actual summaries and analysis thereof to obtain meaningful information concerning the communications network. Furthermore, the ability to manage database space reduces instances where summaries can not be generated due to lack of space in the database, and avoids a user having to manually verify that available space exists in the database and, if not, having to make space available.

At least one embodiment of the invention will now be described, by way of example only, with reference to the accompanying drawings, in which:
**Figure 1** is a schematic diagram of a part of a communications network;
**Figure 2** is a schematic diagram of a business intelligence application;
**Figure 3** is a schematic diagram of an interconnect analysis application forming part of the business intelligence application of Figure 2;
**Figure 4** is a schematic diagram of entities involved in generation of a summary module constituting an embodiment of the invention;
**Figure 5** is a flow diagram of a method for use with the entities of Figure 4;
**Figure 6** is a schematic diagram of a first window generated in accordance with the embodiment of the invention;
**Figure 7** is a schematic diagram of a second window generated in accordance with the embodiment of the invention, and
**Figure 8** is a flow diagram of another method for use with the entities of Figure 4.

Throughout the following description, identical reference numerals will be used to identify like parts.

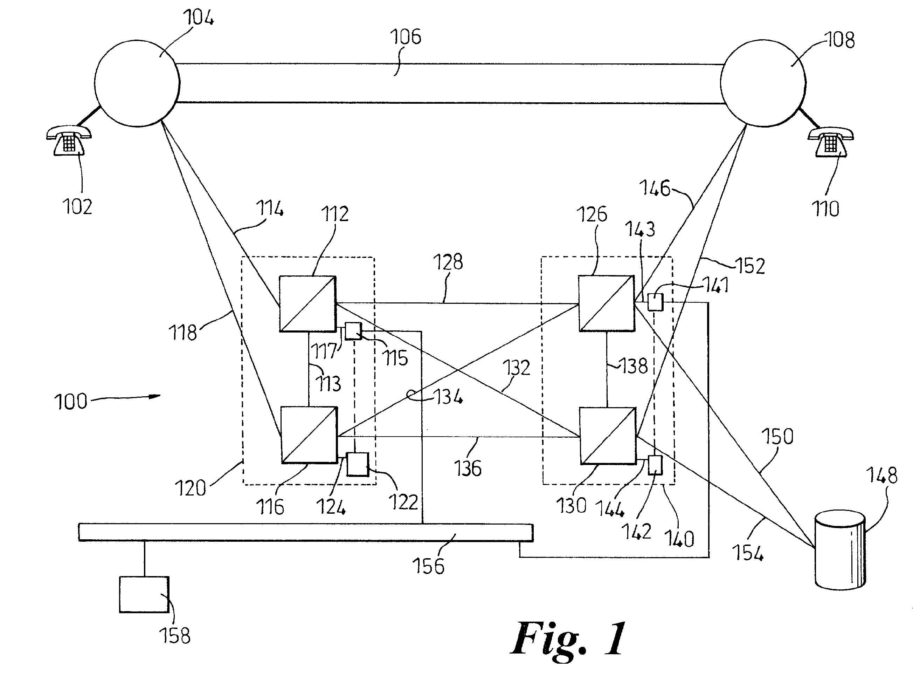

Referring to Figure 1, a signalling network 100 for a communications network, such as a telecommunications network, supports an SS7 signalling protocol and comprises a first network terminating device such as a first telephone handset 102 coupled to a first SSP 104. The first SSP 104 is capable of establishing a trunk connection 106 with a second SSP 108 and vice versa, the second SSP 108 being coupled to a second network terminating device such as a second telephone handset 110.

The first SSP 104 is coupled to a first STP 112 by a first A link 114 and a second STP 116 by a second A link 118. The first STP 112 is coupled to the second STP 116 by a first C link 113 and, together, the first and second STPs 112, 116 constitute a first mated pair of STPs 120. A first Agilent acceSS7 Network Monitoring System (NMS) comprises a first primary collector unit 115 and a first secondary collector unit 122. The first primary collector unit 115 is, although not essentially, co-located with the first STP 112 and coupled to first links (not shown) provided by the first STP 112 by a first electrical connection 117. Similarly, although not essentially co-located, in this example the first secondary collector unit 122 is co-located with the second STP 116 and coupled to second links (not shown) provided by the second STP 116 by a second electrical connection 124.

The first STP 112 is coupled to a third STP 126 by a first B link 128 and a fourth STP 130 by a second B link 132. The second STP 116 is also coupled to the third STP 126 by a third B link 134 and the fourth STP 130 by a fourth B link 136. The third STP 126 is coupled to the fourth STP 130 by a second C link 138 and, together, the third and fourth STPs 126, 130 constitute a second mated pair of STPs 140. A second Agilent acceSS7 NMS comprises a second primary collector unit 141 and a second secondary collector unit 142. The second primary collector unit 141, although not essentially, is co-located with the third STP 126 and coupled to third links (not shown) provided by the third STP 126 by a third electrical connection 143. Similarly, although not essentially co-located, in this example the second secondary collector unit 142 is co-located with the fourth STP 130 and coupled to fourth links (not shown) provided by the fourth STP 130 by a fourth electrical connection 144.

The third STP 126 is coupled to the second SSP 108 by a third A link 146 and an SCP 148 by a fourth A link 150. The fourth STP 130 is also coupled to the second SSP 108 and the SCP 148, but by a fifth A link 152 and a sixth A link 154, respectively.

The first and second primary collectors 115, 141 are coupled to a Wide Area Network (WAN) 156, a remote Unix-based server 158 also being coupled to the WAN 156.

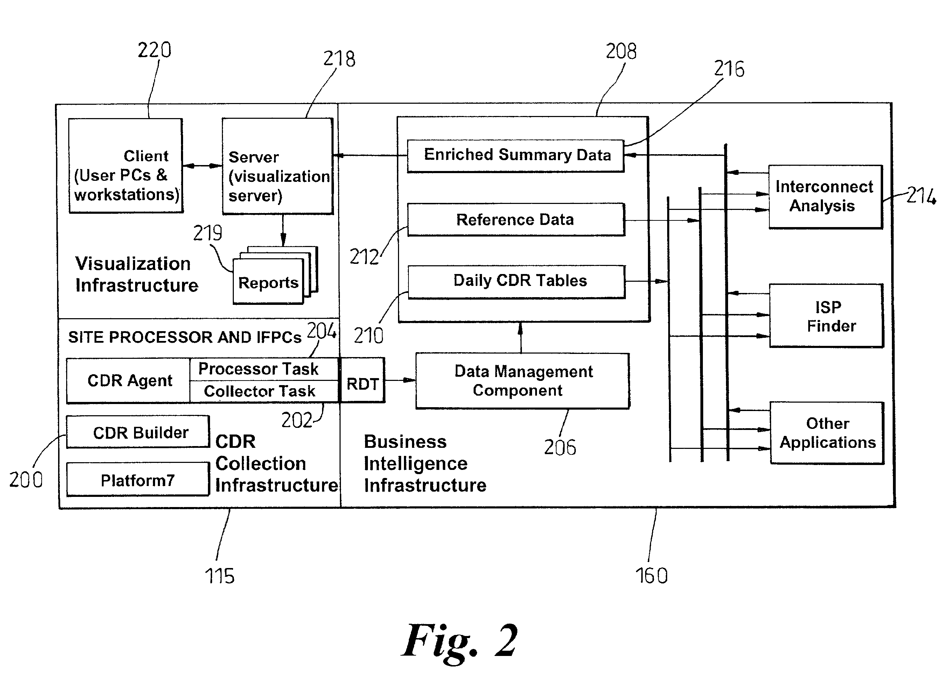

Software agents are distributed between, in this example, the first and second primary collectors 115, 141 and the remote server 158. The software agents are provided to disseminate, in this example, CDRs generated at the first and second NMSs to a Business Intelligence (BI) application 160 (Figure 2) executing on the remote servers 158. The BI application 160 is a software application used to carry out a number of functions in relation to the communications network.

Referring to Figure 2, the first primary collector 115 is a Unix based server supporting a first Detail Record (DR) builder application 200. In this example, the first DR builder application 200 builds CDRs. In addition, the first primary collector 115 supports a collector task 202 capable of communicating with the first DR builder application 200, and a Reliable Data Transfer (RDT) processor task 204 for tracking data. The collector task 202 and the RDT processor task 204 are independently able to communicate with the remote server 158 via the WAN 156 using Transmission Control Protocol (TCP)/Internet Protocol (IP) sockets and/or a File Transfer Protocol (FTP). The primary collector 115 has a same structure as the second primary collector 141. As the NMSs are known system components, they will not be described further.

The BI application 160 running on the remote server 158 is capable of receiving DRs (in this example, CDRs) from the RDT processor task 204. To achieve this, the BI application 160 supports a Data Management Component (DMC) 206 for batch processing raw data in the form of DRs. A database 208, for example a relational database such as an Oracle database, is provided to store: first objects 210, for example first partitions of a first table of processed CDRs; reference data 212 specific to other applications, for example the Interconnect Analysis (IA) application 214; Procedural Language (PL)/SQL packages (not shown in Figure 2); and second objects 216, for example second partitions of a second table of summarised enriched data. The second objects 216 comprising summarised enriched data can be accessed by a visualisation server 218 to provide configured reports 219 for end users using a client terminal 220.

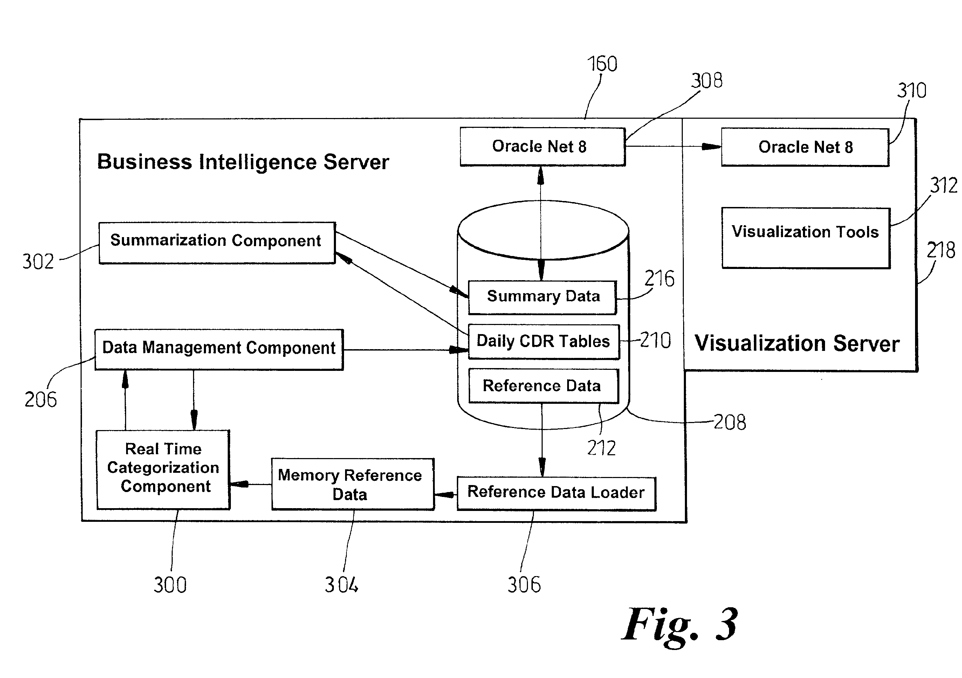

Referring to Figure 3, the IA application 214 comprises a categorisation component 300 and a summarisation component 302. The categorisation component 300 is capable of two-way communication with the DMC 206 and can access a shared memory 304 capable of receiving the reference data 212 via a reference data loader module 306.

The remote server 158 and the visualisation server 218 support an Oracle Net8 interface 308 for communication therebetween. The Oracle Net8 interface 308 provides the visualisation server 218 with access to the second objects 216 of summarised enriched data, the visualisation server 218 comprising one or more visualisation tool 312 that generates the configured reports 219. It should be appreciated that the visualisation server 218 is an adjunct to the IA application 214 and does not contribute to summarisation of DRs. Consequently, the visualisation server 218 will not be described in further detail.

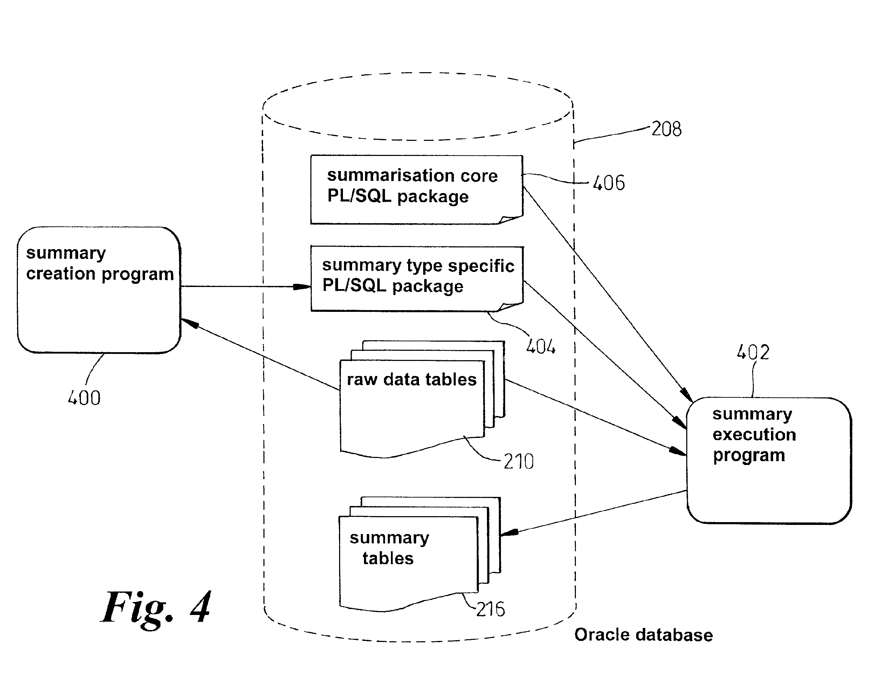

Referring to Figure 4, the summarisation component 302 comprises a summary creation program 400 for generating a summary type specific PL/SQL package 404 that has procedures called by a summary execution program 402. The summary execution program 402 is a skeleton framework comprising a plurality of instructions that call procedures from the summary type specific PL/SQL package 404 and a summarisation core PL/SQL package 406 so as to query the daily CDR table partition and generate a statistical summary of fields of interest in the daily CDR table partition. The database 208 therefore comprises the summary type specific PL/SQL package 404 and a summarisation core PL/SQL package 406. The summarisation core PL/SQL package 406 is a collection of staple procedures, for example to add or remove partitions, or determine free space, commonly used when summarising data. Each staple procedure comprises a number of executable statements. In contrast, the summary type specific PL/SQL package 404 is a collection of custom procedures, the custom procedures being specific to a given type of summary as defined by a user and generated by the summary creation program 400. Each custom procedure also comprises a number of executable custom statements.

In operation, the CDR builder application 200 builds CDRs from Message Signal Units (MSUs) intercepted by the first and second NMSs. The CDRs are then collected by the collector task 202 and delivered to the processor task 204. The processor task 204 passes the collected CDRs to the DMC 206 and the DMC 206 batch processes the collected CDRs, in this example once every 24 hours, to create a daily CDR table partition that is added to the first objects 210.

When creating the daily CDR table partition but prior to storing the daily CDR table partition, the DMC 206 calls the categorisation component 300 of the IA application 214. The categorisation component 300 processes the CDRs provided by the DMC 206 and assigns a category to each call, for example, corresponding to the call being local, intrastate or interstate. The categorisation component 300 also produces Consolidated Call Records (CCRs) from single calls and correlated CDRs from transit calls, the DRs being subsequently enriched by the IA application 214. In order to assign categories to each call, the reference data loader module 306 loads the reference data 212 into the shared memory 304 for use by the categorisation component 300. The categorisation component 300 accesses the reference data from the shared memory 304 and uses the reference data 212 to assign the categories to each call, thereby enriching the raw data. The enriched raw data is then stored as a daily CDR table partition that is added to the first objects 210 by the DMC 206.

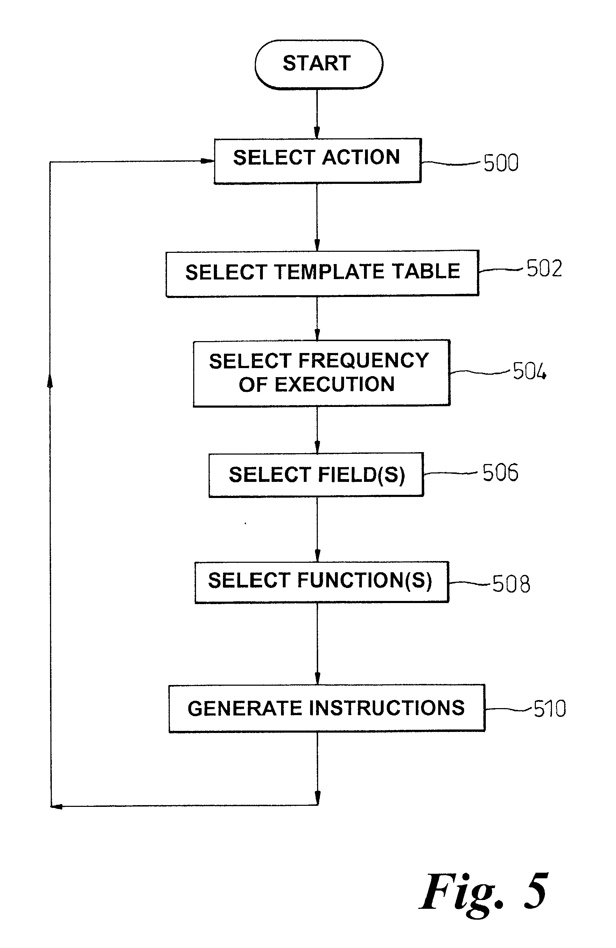

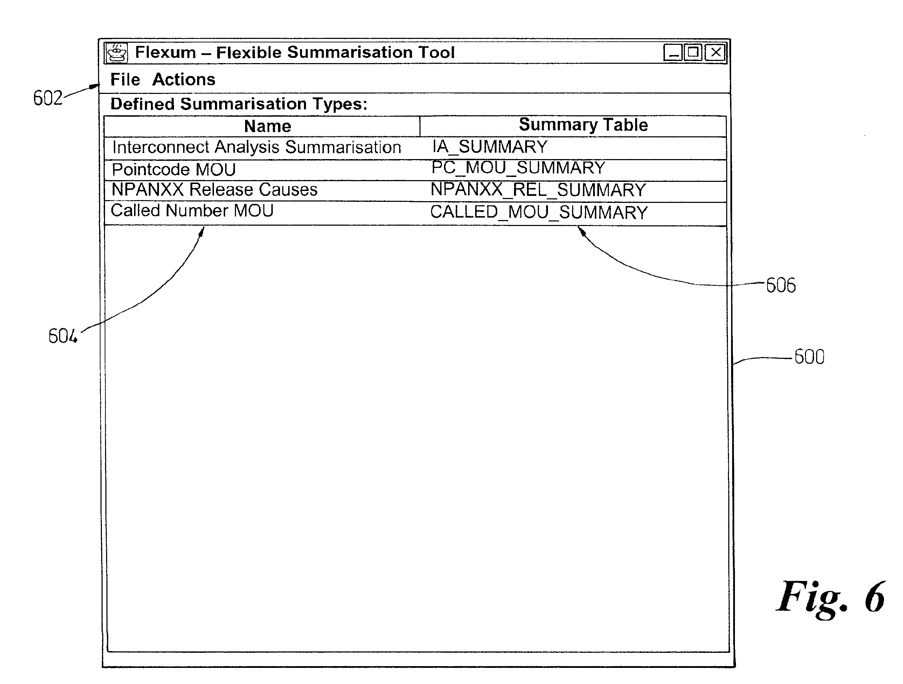

Turning to the summary creation program 400, this can be used by an end user, for example, an engineer employed by or contracted to an owner of the communications network. With reference to Figures 5 and 6, the summary creation program 400 opens a summary manager window 600 comprising a drop-down menu 602 and a table listing names of existing summary execution modules 604 (in this example, the summary type specific PL/SQL modules 404) and listing names of table partitions 606 where summaries are stored corresponding to the existing summary execution modules 604.

The drop-down menu 602 comprises an "Actions" menu from which the end user can choose to delete, view or run one of the types of the existing summary execution modules listed, or add a new summary execution module that can be executed by the summary execution program 402.

In order to further illustrate operation of the summarisation component 302, the summarisation component 302 will now be described in the context of enriched CDRs stored once-a-day by the DMC 206 in the daily CDR table partition having the name CDR_YYYYMMDD_L01_NOSTUDY_D11, where YYYYMMDD refers to the date of creation of the daily CDR table partition.

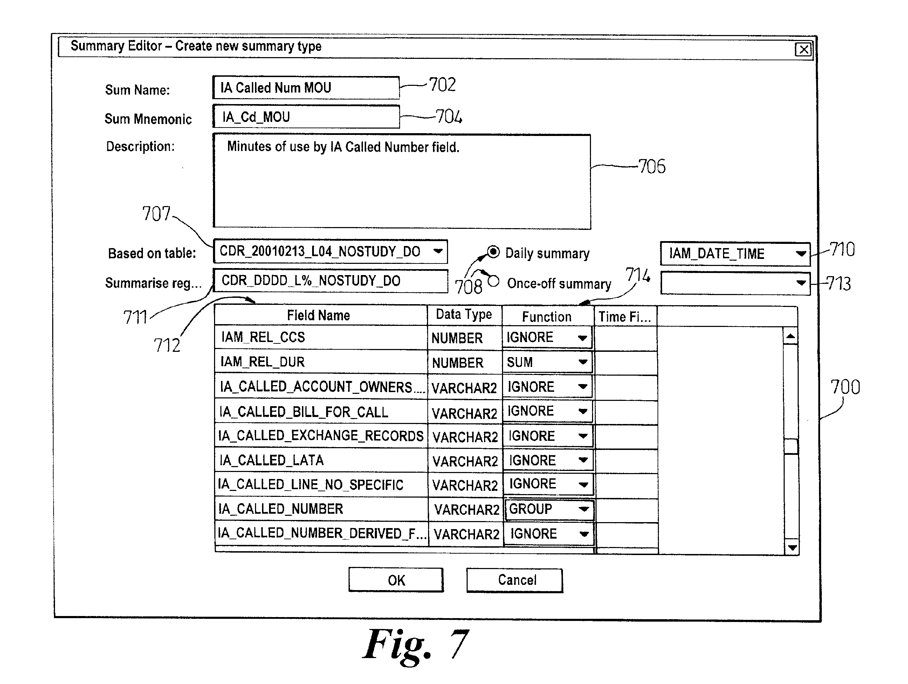

The daily CDR table partition contains a row for every CDR collected. Each table partition possibly containing hundreds of millions of rows. In order to create the new summary module to be used to generate a daily summary of each new daily CDR table partition 210, for example to ascertain the number of calls routed between originating and terminating pointcodes, the user firstly selects the "Add" option from the "Actions" menu (Step 500). In response to the user choosing the "Add" option, the summarisation component 302 opens a summary editor window 700 (Figure 7) comprising a first text box 702 which the user completes with the name of the new summary execution program, for example IA Called Num MOU, a second text box 704 which the user completes with a mnemonic, for example IA_Cd_MOU, corresponding to the name of the new summary execution module, and a third text box 706 in which the user enters a short description of the new summary execution module, for example "Minutes of use by IA Called Number field". Once the user has completed at least the first and second text boxes 702, 704, the user selects (Step 502) one of the first objects 210 that the user wants to act as a template for the purpose of identifying fields that are to be used by the new summary execution module. Consequently, one of the first objects 210 is selected using a first drop down menu 707. The user then selects (Step 504), using a radio button 708, whether the summary is to be executed daily or once only.

When summarising data over a given time period, such as a day, different time-related fields can be used as a point of reference. For example, fields corresponding to a time of an Initial Address Message (IAM) or a Release Message (REL) within a CDR, or a time of a query within a TDR, can be used as the point of reference to identify DRs in the given time period. The user therefore then selects (Step 504), using the second drop down box 710, a time field upon which the daily summary is to be based, so that upon execution summarised data is partitioned by the value of the time field selected by the user. The user can also specify a level of aggregation corresponding to the time field, for example daily or hourly, by making an appropriate selection using a third drop down box 713. In addition, as the name of each daily CDR partition table 210 is date dependent, the user completes a fourth text box 711 with a template name (or mask) comprising one or more wildcard corresponding to the date component of the name of the daily CDR table partition 210, for example CDR_%_L01_NOSTUDY_D11, where "%" is the wildcard.

Once the timing and frequency of the generation of the summary has been selected (Step 504), the user must select (Step 506) the fields 712 that are to be used to generate the daily summary and select (Step 508), using function drop-down boxes 714, functions to be performed with respect to the fields 712 selected, for example SUM, COUNT or GROUP. In this example relating to originating and terminating pointcodes, the user selects fields corresponding to originating and destination pointcodes of interest (not shown in Figure 7) and selects the GROUP function for each of the fields relating to originating and destination pointcodes selected. In addition, should the user wish to know a total duration of calls between the selected pointcodes, the user sets the function field of the IAM_REL_DUR field to SUM.

Once the fields of interest and corresponding functions have been chosen, the required details of the summary have been provided by the user and the summary creation program 400 generates (Step 510)a new summary type specific PL/SQL package (constituting the new summary execution module) comprising, in this example, functions and/or procedures that include a collection of SQL statements (as already decribed above) that can be called by the summary execution program 402.

More specifically, a list of fields and the corresponding functions are created from the user's choices. To create the SQL statements to generate a summary, it is necessary to iterate through the list of fields and functions and add items to an SQL select statement. For example, if a field is to be summed, the SQL statements sum (fieldname) is inserted into a query or if a field is being used as a grouping, the fieldname is inserted into the select statement and in the group by clause within the select statement, thereby causing upon execution data to be divided into groups, the query being executed upon each group. The SQL instructions also contain any conditions specified by the user, for example restricting the possible values of a given field, the field chosen by the user to allow the summary table 216 to be partitioned by time as explained above in connection with the second drop down box 710, or extra SQL instructions to enable better performance of the SQL statements. Partitioning by time simplifies deletion of unwanted historical data; deleting a partition is easier than deleting unsorted specific historical data due to the need to search.

The generated SQL query is then inserted into the new summary type specific PL/SQL package 404, procedures of which can be called by the summary execution program 402.

The summary execution program 402 can be run from the summary manager window 600 by highlighting the name of the new summary execution module 404, namely "IA Called Num MOU", from the list of summary execution modules 604 and selecting the "run" option from the "Actions" menu. Alternatively, the new summary execution module 404 can be run by entering a command on a command line. For example, the command can be inserted into the post-load script of the DMC 206 (a Unix shell script), the post load script being executed after every load of the DMC 206. By using the template name defined in the fourth text box 711, the summary execution program 402 is able to access the daily CDR table partition loaded by the DMC 206 and corresponding to the date of load by the DMC 206.

Upon execution of the summary execution program 402, the summary execution program 402 accesses all daily CDR table partitions conforming to the name template. A number of the procedures called from the summary type specific PL/SQL package 404 and the summarisation core PL/SQL package 406 by the summary execution program 402, in this example, carry out an SQL query that selects data from the daily CDR table partitions accessed, groups the results of the SQL selection by the fields specified in the design of the "IA Called Num MOU" summary execution module and performs functions such as SUM or COUNT upon the field(s) as specified in the summary design. The results of this function are then, in this example, almost ready to be stored as the daily summary as an addition to the second objects 216.

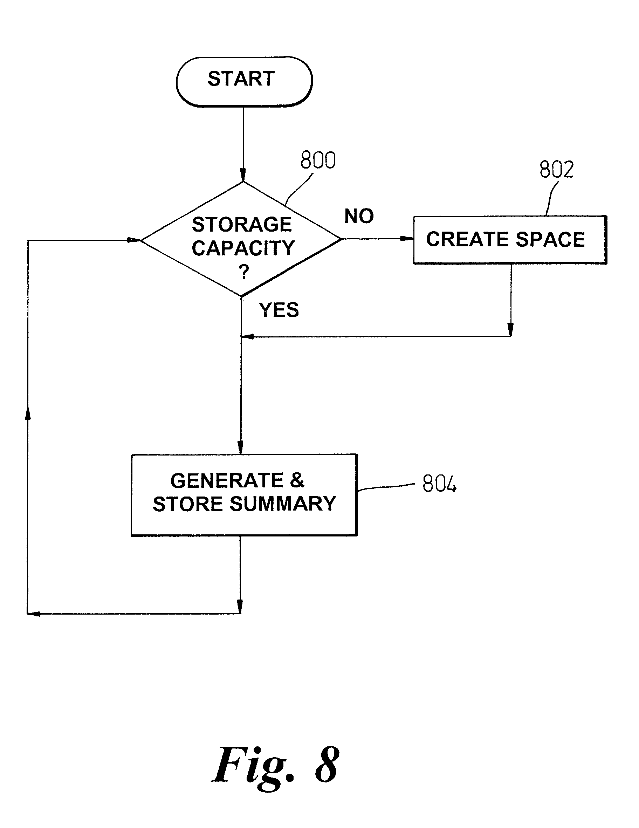

Prior to storing the daily summary as the addition to the second objects 216, the new summary execution program 402 determines (Step 800 - Figure 8) an amount of free storage space available in the database 208. If insufficient space is available, the summary execution program 402 identifies (Step 802) and deletes an old stored summary. Once storage space is available, or if storage space is already available, the new summary execution program 402 adds a partition (if necessary) to the second objects 216 and the daily summary is generated (Step 804) by executing the instructions forming the summary execution program 402 as already described above.

For the purpose of troubleshooting summaries, a run ID is added to each entry in a given daily CDR table partition. A summary log entry is created in which the run ID is provided along with a time and date of execution of a given summary execution program. Consequently, if duplicate daily CDR table partitions exist, the summary that is to be kept is identified by its run ID and duplicate summaries can be deleted.

In the above example, it is assumed that the various objects already exist, for example the daily CDR table partitions and the summary log. However, the summary and the summary log tables are automatically created by the summary execution program before summarisation takes place if the summary and summary log tables do not already exist.

Although the above example has been described in the context of table partitions, it should be appreciated that other objects are envisaged, for example unpartitioned tables or a mixture of table partitions and unpartitioned tables. Similarly, although specific reference has been made to CDRs, other DRs can be summarised.

Alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or nonvolatile, such as semiconductor, magnetic, optical or other memory device.

## Claims

1. A method of generating a summary module for a communications system, the method comprising the steps of:
identifying (502) a desired object template to be summarised;
defining the summary by selection (506,508) of at least one field from the desired object template and at least one function associated with the at least one field;
generating (510) a plurality of instructions for summarising at least one object (210) compatible with the desired object template according to the selected at least one field and the at least one function **characterised in that**:
generation (510) of the plurality of instructions is automated.

2. A method as claimed in Claim 1, wherein the plurality of instructions is arranged to be executable more than once, execution including accessing more than one object (210) over a period of time, the more than one object (210) having the selected at least one field.

3. A method as claimed in Claim 1 or Claim 2, wherein the desired object and the more than one object are tables and/or partition tables and/or views.

4. A method as claimed in any one of Claims 1 to 3, wherein the plurality of instructions is arranged to be executable periodically.

5. A method as claimed in any one of Claims 1 to 4, wherein the summary is further defined by identifying a grouping of fields.

6. A method as claimed in any one of the preceding claims, further comprising the step of: executing the plurality of instructions by a set of instructions via a computer program with either a graphical user interface or a command line user interface.

7. A method as claimed in any one of the preceding claims, further comprising the step of managing space (800,802) within a database comprising one or more summary generated by the plurality of instructions.

8. A method as claimed in any one of the preceding claims, further comprising providing a mask to identify the more than one object over the period of time.

9. A method of summarising data **characterised by** the steps of:
generating a summary module as claimed in any one of Claims 1 to 8;
executing the summary module more than once.

10. A summary module generator for a communications system, comprising:
an interface (700) to permit identification of a desired object template to be summarised, and selection of fields (712) from the desired object template and at least one function (714) associated with the at least one field; **characterised by**:
means for automated generation of a plurality of instructions for summarising at least one object (210) compatible with the desired object template according to the selected at least one field and the at least one function.

11. A generator as claimed in Claim 10, wherein the plurality of instructions is arranged to be executed more than once, execution including accessing more than one object (210) over a period of time, the more than one object (210) having the selected at least one field.

12. A generator as claimed in Claim 10 or Claim 11, wherein the plurality of instructions is executable by a set of instructions via a computer program with either a graphical user interface or a command line user interface.

13. A generator as claimed in any one of Claims 10 to 12, wherein the plurality of instructions is arranged to be executable periodically.

14. A generator as claimed in any one of Claims 10 to 13, wherein the interface permits identification of a grouping of fields.

15. A generator as claimed in any one of Claims 10 to 14, further comprising means for managing space (800,802) within a database comprising one or more summary generated by the plurality of instructions.

16. A generator as claimed in any one of Claims 10 to 15, wherein a mask is provided to identify the more than one object.

17. A summarisation management unit comprising:
means for storing a list of summary modules; and
means for executing at least one summary module from the list of summary modules.

18. A communications network comprising the summary module generator as claimed in any one of Claims 10 to 16.

19. A computer program element comprising:
computer program code means to make a computer execute the method as claimed in any one of Claims 1 to 8.

20. A computer program element as claimed in Claim 19, embodied on a computer readable medium.
